(19) Europäisches Patentamt
European Patent Office
Office européen des brevets

(11) **EP 1 979 218 B1**

(12) **EUROPEAN PATENT SPECIFICATION**

(45) Date of publication and mention
of the grant of the patent:
**09.03.2011 Bulletin 2011/10**

(51) Int Cl.:
***B62B 7/08*** *(2006.01)*     ***B62B 9/10*** *(2006.01)*

(21) Application number: **06812730.7**

(22) Date of filing: **31.10.2006**

(86) International application number:
**PCT/NL2006/050271**

(87) International publication number:
**WO 2007/053019 (10.05.2007 Gazette 2007/19)**

(54) **FOLDING STROLLER, SUCH AS A BUGGY, COMPRISING A FIXING CROSS BAR SYSTEM**

KLAPPBARER KINDERWAGEN WIE EIN BUGGY MIT EINEM BEFESTIGUNGSQUERSTANGENSYSTEM

POUSSETTE PLIABLE A SYSTEME DE BARRE TRANSVERSALE DE FIXATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.11.2005 NL 1030330**

(43) Date of publication of application:
**15.10.2008 Bulletin 2008/42**

(73) Proprietor: **Royalty Bugaboo GmbH**
**6300 Zug (CH)**

(72) Inventor: **BARENBRUG, Machiel, Gerardus, Theodorus, Marie**
**NL-1026 CD Amsterdam (NL)**

(74) Representative: **van Westenbrugge, Andries Nederlandsch Octrooibureau Postbus 29720 2502 LS Den Haag (NL)**

(56) References cited:
**EP-A- 0 494 736**    **EP-A- 1 086 876**
**EP-A- 1 295 776**    **FR-A- 2 544 270**
**US-A- 3 989 295**    **US-A- 4 765 645**
**US-A- 5 472 224**

**Description**

The present invention relates to a folding stroller, such as a buggy, comprising a rod frame, which stroller is provided with a cross bar system which, when the buggy is unfolded, fixes the mutual distance between a left and right front wheel or between a left and right rear wheel in order to impart, viewed in the transverse direction of the stroller the required rigidity to the frame at the location of said wheels.

In the remainder of the description and in the claims of the present application, the cross bar system is related in each case to the front wheels of the stroller. However, as stated hereinbefore, the cross bar system can also be provided on the rear wheels of the stroller.

Folding buggies comprising a cross bar system for fixing front wheel rods are known *per se* and usually consist of two hinging cross bars. This is for example known from EP 1.086.876; US 5.472.224; and US 4.765.645. The first hinging cross bar is joined in a hinging manner, at a first end, to the right front wheel rod and the second cross bar is joined in a hinging manner, at a first end, to the left front wheel rod. The first and second cross bars are also joined together in a hinging manner at a respective second end. The hinging axes of all three hingable joints are mutually parallel and extend transverse to the longitudinal axis of the cross bar system. When the buggy is unfolded, the first and second cross bars are in line with each other and when the buggy is collapsed, they form an acute angle or they are substantially parallel with each other. When the buggy is unfolded, the hinging connection of the second ends of the cross bars will usually pass right through the dead point and be locked against further through-hinging. In order to fold the buggy up again, the hinging fastening of the second ends should then first be pulled back through the dead point in order subsequently to allow the cross bars to pivot toward each other. Drawbacks of a cross bar system of this type include the fact that such a cross bar system can relatively easily become unlocked during use from the locked state, which is defined by the hinging limitation and relatively low passing of the dead point. This can, for example, occur as a result of the hinging fastening of the second ends being struck.

Further, there are also known (see for example US 3.989.295; EP 494.746; and EP 1.295.776 which comprise all the features of the preamble of claim 1, and thus constitute the closest prior art.) cross bar systems having three cross bar elements, which are mutually connected by two hingeable joints. Like with the above mentioned two cross bar element systems, the ends of the outer cross bar elements are also hingeably joined to the respective front wheel rods. The in total four hingeable joints have mutually parallel hinging axes, which extend transverse to the longitudinal axis of the cross bar system.

The aim of the present invention is to provide a folding stroller, such as a buggy having a seat, comprising a rod frame, wherein an improved cross bar system is provided between two, in the transverse direction of the stroller, opposing wheel rods of the buggy, which cross bar system overcomes, *inter alia,* the aforementioned drawbacks of the known cross bar system.

According to the invention, the aforementioned aim is achieved by providing a folding stroller, such as a buggy having a seat, comprising a rod frame with:

* a pull/push rod;
* a right and a left front wheel rod with a right and left front wheel-carrying end, respectively, each end being provided with a front wheel;
* a cross bar system which is provided between the front wheel rods, at the front wheels, rigidly connects, when the stroller is unfolded, viewed in the transverse direction of the stroller, the right and left front wheel-carrying ends and is constructed in such a way that when the stroller is folded, the distance between the right and left front wheel-carrying ends is less than it is when the stroller is unfolded;
  wherein the cross bar system comprises:
* a right cross bar fastened to the right front wheel rod;
* a left cross bar fastened to the left front wheel rod;
* a cross bar axis defined by the longitudinal direction of the cross bar system;
* a middle part joining the right cross bar and left cross bar together;

the right and left cross bars being in line and carrying the middle part; the right and left cross bars each being provided with first interlocking members and the middle part being provided, for each cross bar, with second interlocking members which are provided such that they are interlockable by displacement of the middle part with respect to the aforementioned cross bar axis in a first direction, in order to fix the right and left cross bars mutually to form a, viewed in the longitudinal direction of the cross bar axis, rigid cross bar system.

By constructing the cross bar system with a left and right cross bar and also a middle part which joins said bars together and is displaceable with respect to the longitudinal axis of the right and left cross bar and by providing interlocking members which cooperate in such a way that on displacement of the middle part about the longitudinal axis of the left and the right cross bar, it is achieved that said left and right cross bars are mutually fixed and are optionally also pushed apart from each other. A system of this type can, for example, be constructed by connecting the middle part to the right cross bar using, for example, a right-handed screw thread and by connecting it to the left cross bar using, for example, a left-handed screw thread. Obviously, the left and right-handed screw threads can also be provided the other way round. The advantage of a system of this type is that the rigidity of the cross bar system is ensured much more effectively during use. The cross bar system according to the invention is much less sensitive to the loss of rigidity resulting from accidental striking thereof.

Although the "displacement of the middle part in the first direction" can be a shift of said middle part in a direction transverse to said cross bar axis, it is in accordance with the invention advantageous if the middle part is arranged on the right and left cross bar so as to be able to rotate about the cross bar axis and if "the displacement of the middle part in said first direction" comprises rotation of the middle part about the aforementioned cross bar axis in said first direction. Utilising rotation allows relatively large displacement while taking up relatively little space. The relatively large displacement allows in this case reliable, effective interlocking.

It is in this regard advantageous in accordance with the invention if the second interlocking members each comprise a plurality of cams and the first interlocking members each comprise a corresponding plurality of recesses; or if the first interlocking members each comprise a plurality of cams and the second interlocking members each comprise a corresponding plurality of recesses. As a result of the fact that a plurality of cams and a plurality of corresponding recesses are provided, the force required for pushing the right and left cross bars apart, will, when the stroller is unfolded, be distributed over a plurality of cams/recesses, thus reducing the risk of damage to the cams/recesses.

It is also advantageous in accordance with the invention if the cams and recesses are configured in such a way that, when the stroller is unfolded, the contact faces between said cams and recesses extend substantially transversely to said cross bar axis. As a result, the reactive forces which are active between the cams and recesses do not have any component which is active in the tangential direction. Such a component, active in the tangential direction of the reactive forces, could cause the rigidity of the cross bar system to be lost.

It is also advantageous in accordance with the invention if the cams and/or the recesses have a taper, viewed in the aforementioned first direction. The taper prevents play in the interlocking interlocking members. Said taper will preferably be provided on the distal side, facing the recess, of the cam or the distal side, facing the cam, of the recess respectively. Preferably, the proximal portion of the cam or recess, respectively, may therefore be configured in this case in such a way that, when the stroller is unfolded, the contact faces between the cams and recesses extend substantially transversely to the cross bar axis. The taper provides a guide for guiding the cams and recesses toward one another. Providing the taper distally and configuring, in each case, the cams and recesses proximally in such a way that when the stroller is unfolded, the contact surface between the cams and recesses extends substantially transversely to the cross bar axis also ensures in this regard that in the unfolded state the tapers are, as it were, out of the equation and therefore cannot lead to the rigidity being lost.

According to a further embodiment of the invention, the frame also carries a right and left rear wheel, the right and left rear wheels being provided at an invariable mutual distance, and the distance between the front wheel-carrying ends of the right and left front wheel rod being greater than the mutual distance of the rear wheels when the stroller is unfolded. The term "invariable mutual distance of the rear wheels" refers in this case to the fact that the mutual distance of the rear wheels is the same when the stroller is folded and when the stroller is unfolded. This accordingly does not rule out the possibility of the rear wheels being swivelling wheels, in which case various, relatively minor alterations in the mutual distance are conceivable as a result of the pivoting of the wheels. Providing, in the case of a stroller, at one longitudinal end right and left wheels attached at invariable mutual distance — referred to in the present case, by way of relative distinction, as the "rear wheels" — and at the other longitudinal end left and right wheels — referred to in the present case, by way of relative distinction, as the "front wheels" — the mutual distance of which is greater when the stroller is unfolded than when the stroller is folded, means, on the one hand, that when the stroller is unfolded the stability of the buggy is greater owing to the greater intermediate distance between said front wheels and, on the other hand, that when the stroller is folded, the dimensions of the stroller are relatively compact as a result of the fact that said front wheels are located closer together.

It is particularly advantageous in accordance with the invention if the distance between the front wheel-carrying ends of the right and left front wheel rod is less than the mutual distance of the rear wheels when the stroller is folded. When the stroller is folded, the width of the said folded stroller can thus be scarcely or no greater than the distance as determined by the rear wheels provided at an invariable mutual distance.

It is also advantageous in accordance with the invention if, viewed in the folded state of the stroller, the distance between the outsides of the front wheels is less than the distance between the insides of the rear wheels. A highly compact integral unit can thus be produced in the folded state. The front wheels will not project, or will at least not project far, beyond the minimum width determined by the rear wheels even if said front wheels should be swivelling wheels and be swivelled in the transverse position.

According to a further advantageous embodiment of the invention, the front wheels are swivelling wheels, the pivot axes of which define the front wheel-carrying ends of the front wheel rods and each swivelling wheel has an eccentric distance $D_{ex}$ which is identical to the horizontal distance between the wheel rotation axis and the pivot axis. In the case of a stroller with swivelling wheels, in particular in the case of a buggy with swivelling wheels at one of the longitudinal ends and parallel, non-swivelling wheels at the other longitudinal end, there arise two problems which are overcome simultaneously in this embodiment. The first problem is that when the stroller/buggy is folded, the swivelling wheels can be problematic when storing the stroller/buggy, for example in a car. That is to say, when the swivelling wheels are located transversely, they are relatively protrusive, so that, in the folded state, the folded stroller/buggy is wider than is strictly necessary and is therefore less easy to store. A further problem of strollers/buggies with swivelling wheels is that when the stroller/buggy is unfolded, there is less lateral stability against toppling when the wheels are swivelled with respect to the straight-ahead travel position than there is in the straight-ahead travel position. This is due to the fact that the eccentric distance $D_{ex}$ is unequal to 0 cm in order to allow the swivelling wheels to follow in direction. When a stroller/buggy turns to the right in the forward direction, the right swivelling wheel will, as a result of the "eccentric distance unequal to 0 cm", follow this turn. The point at which said right swivelling wheel rests on the ground then moves in this case, viewed in the transverse direction of the stroller/buggy, toward the centre of the stroller/buggy. It is this point of contact between the swivelling wheel and the ground that determines the lateral stability, at least toward the right-hand side of the stroller/buggy. The closer said point is to the middle longitudinal axis of the stroller/buggy, the less stable the stroller/buggy will be. So much for the problems associated with a structure of this type. In the present embodiment of the invention, these problems are both at least partially overcome by positioning the swivelling wheels further apart from one another when unfolding the stroller/buggy than when the stroller/buggy is folded. Positioning said wheels further apart from one another when the stroller/buggy is unfolded provides additional stability, whereas positioning them closer together when the stroller/buggy is folded benefits the compactness of the stroller/buggy in the folded state.

It is particularly advantageous in accordance with the invention if, when the stroller is unfolded from the folded to the unfolded state, the increase in distance between the right and left front wheel-carrying ends of the front wheel rods is greater than twice the eccentric distance. It may thus be reliably ensured that, when the stroller is unfolded, the lateral stability of the stroller, in the region of said front swivelling wheels, will not be able to be less than the lateral stability based on the folded state of the stroller. Persons purchasing a buggy who wish to compare the lateral stability of a plurality of buggies will have merely, in the case of the buggy according to the invention, to measure the mutual intermediate distance of said swivelling wheels when the buggies are folded. As a result of the increase in said intermediate distance by at least 2 x the eccentric distance, it may reliably be assumed that the distance measured in the folded state defines a minimum stability. This simplifies the mutual comparison in this regard of various buggies.

According to a further advantageous embodiment of the invention, the front wheels and rear wheels are both provided symmetrically with respect to a vertical middle longitudinal plane of the stroller, the point of contact between each respective rear wheel and the ground is located at a first transverse distance $D_1$ from said middle longitudinal plane, the pivot axis of each respective front wheel is at a second transverse distance $D_2$ from the middle longitudinal plane when the buggy is unfolded; and the following equations apply:

$$D_2 = D_1 + Q \times D_{ex}$$

$D_1$, $D_2$, $D_{ex}$ being in cm and $Q \geq 0.5$.

In this embodiment, the swivelling wheels on the front side are, when the stroller is unfolded, positioned further apart from one another than the rear wheels, which will usually be non-swivellable wheels. The mutual distance between the front swivelling wheels will be at least $D_{ex}$ greater than the distance between the rear wheels. With respect to the middle longitudinal plane of the stroller, this is then half, i.e. at least $0.5\,D_{ex}$. Maximum compensation is therefore not provided for the loss of stability which can occur as a result of the swivelling of a wheel.

In order to be able to ensure that no loss of lateral stability occurs up to a swivelling of the swivelling wheels over approximately 45°, it is advantageous in accordance with the invention if $Q \geq 0.75$. In order even to ensure that in this case, with respect to the straight-ahead travel state, no loss of lateral stability occurs under the most extreme conditions - i.e. on swivelling of the swivelling wheel over 90° - it is advantageous in accordance with the invention if $Q \geq 1$.

According to a further advantageous embodiment, the cross bar system comprises at least one pull member, such as a cord, which is fastened, on the one hand, to the middle part and, on the other hand, to a portion of the frame of which, when the stroller is unfolded and viewed in a direction transverse to said cross bar axis of the cross bar system, the distance between said cross bar axis and the cross bar system increases, and wherein the pull member is taut when the stroller is unfolded. When the stroller is unfolded, the cross bar system may thus be brought of its own accord, without additional manual intervention, to the rigid state. In addition, the taut pull member can be used in order to rigidify the entire unfolded frame. The pull member can be compared in this regard to oblique pull rods/wires in a rectangular truss. The pull member may therefore in accordance with the invention very easily be a cord or rod.

According to a further advantageous embodiment of the invention, the middle part of the cross bar system comprises a footrest, which footrest extends approximately horizontally when the buggy is unfolded. It will be noted in this regard that the term "approximately horizontally" includes relatively slight angles of inclination up to approximately 20° with respect to the horizontal. It will be clear to a person skilled in the art that a footrest of this type will be able to slant somewhat with respect to the horizontal in such a way that a child sitting in the buggy and using the footrest can place its feet against it.

In order to improve the rigidity of the cross bar system even further, it is according to the invention advantageous when the right cross bar is rigidly fastened to the right front wheel rod and when the left cross bar is rigidly fastened to the left front wheel rod. This means that the join between the right/left cross bar and right/left front wheel rod does not allow any hinging. Although the non-hinging connections between the right cross bar and middle part and between the left cross bar and middle part already prevent hinging of the right/left cross bar with respect to the right/left front wheel rod, excluding any such hinging by rigidly fastening reduces the risk of malfunctioning of the (un)folding action of the stroller.

The present invention will be explained in more detail below with reference to an illustrative embodiment represented schematically in the drawings, in which:

Figure 1 is a schematic, perspective view of a buggy according to the invention, which is provided with a detachable seat;
Figure 2 is a view corresponding to Figure 1, but wherein the detachable seat has been removed;
Figure 3 is a schematic, perspective view of a detachable seat for a buggy according to the invention;
Figure 4 is a perspective view of the buggy according to Figures 1, 2 and 3 in the folded state, Fig. 4a showing the folded buggy with the seat and Figure 4b showing the same folded buggy without the seat;
Figure 5 is a detailed, perspective, schematic view of the central portion of the main frame of the buggy according to Figures 1 to 4;
Figure 6 is a detailed, schematic and perspective bottom view of a portion of the front portion of the frame of a buggy according to the invention;
Figure 7 is a highly schematised plan view of a portion of the cross bar system;
Figure 8 is a cross section taken along the line VIII-VIII in Figure 7;
Figure 9 is a highly schematic plan view of the positions of the wheels of the buggy according to the invention in the folded-up and unfolded state; and
Figure 10 is a highly schematic view of a swivelling wheel to allow more precise definition of certain concepts.

The concepts of "front" and "rear", as in front wheels and rear wheels, are used in the present application with reference, viewed in the longitudinal direction of the stroller/buggy, to one longitudinal end and with reference to the other longitudinal end. Which part is in use the front and which part the rear of the stroller/buggy will depend, *inter alia,* on the manner of use, i.e. whether the stroller/buggy is pushed or pulled. It is also the case that the firm Bugaboo sells buggies wherein the pull/push rod can be folded over with respect to the remainder of the frame — to take a concrete example, over approximately 90 to 120° - in order optionally to position said rod on one longitudinal end of the buggy or on the other longitudinal end of the buggy. The user can then either pull or push the buggy from one longitudinal end or pull or push the buggy from the other longitudinal end. This capacity of the pull/push rod to be folded over from one longitudinal end to the other longitudinal end is, *inter alia,* advantageous if there are provided at one longitudinal end swivelling wheels and at the other longitudinal end non-swivellable wheels which remain parallel to each other and may have wider tyres and a larger diameter than the swivelling wheels. As a result, depending on the conditions under which the buggy is used, the position of the pull/push rod may thus be adapted. If there is relatively little space in which to manoeuvre the buggy, such as is the case, for example, in a supermarket, then provision may be made to position the pull/push rod at the longitudinal end with the swivelling wheels. If the buggy is used on a relatively soft ground, for example a sandy ground, then it will usually be advantageous if the pull/push rod is positioned at the end with the fixed, non-swivelling wheels. It will be clear from the foregoing that the concepts of "front" and "rear" are, in the case of a stroller/buggy according to the invention (for example, in relation to the concepts of front wheels and rear wheels), relative concepts which distinguish between provision at one longitudinal end of the buggy and provision at the other longitudinal end of the buggy, although this does not mean that the scope of protection is restricted by the use of the concepts of "front" and "rear". It will also be clear that the same inherently applies to the concepts of "left" and "right".

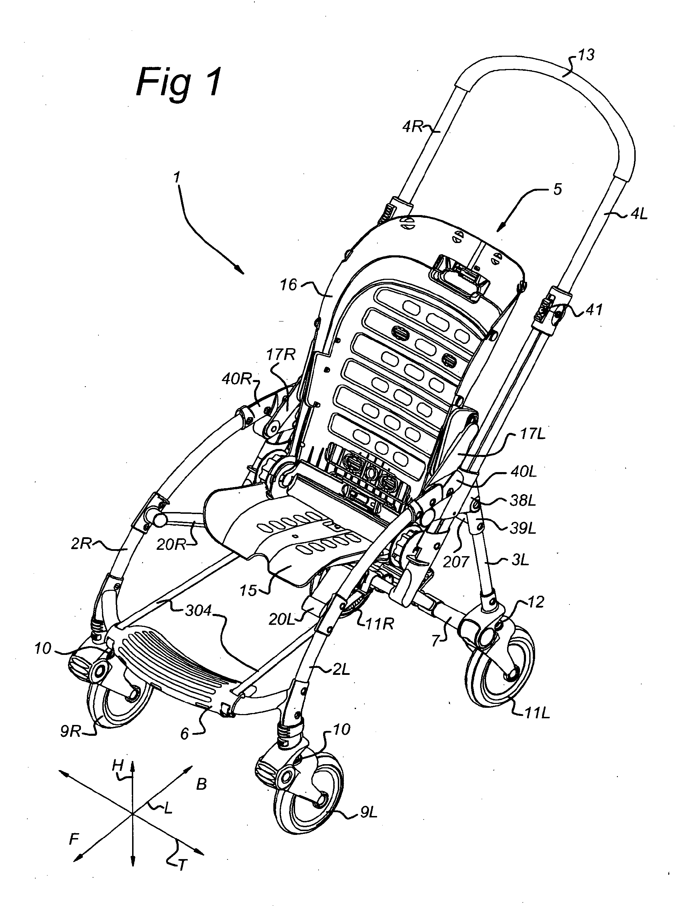

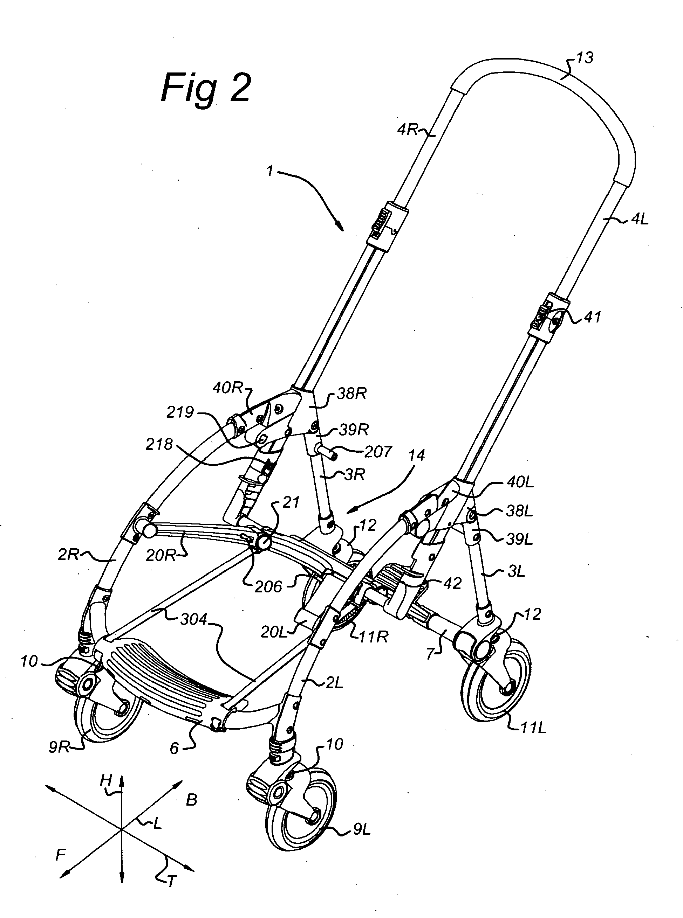

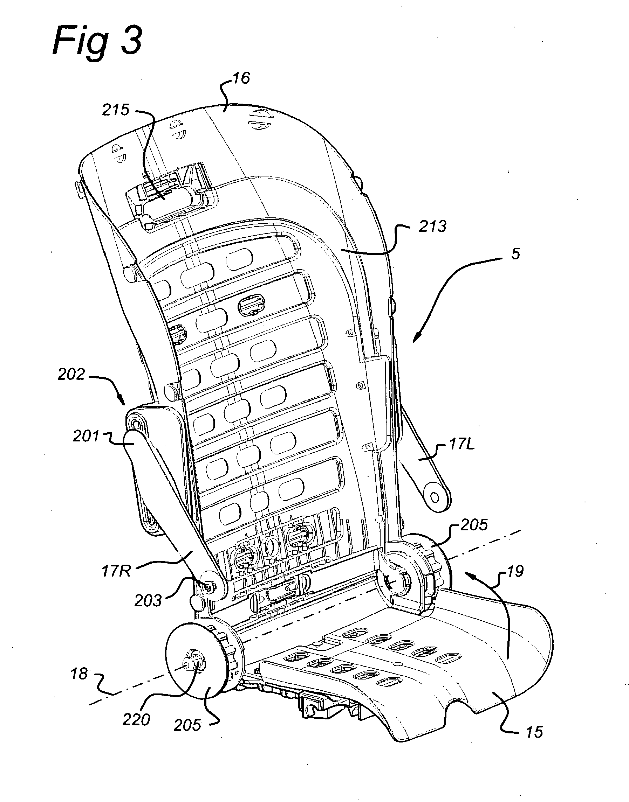

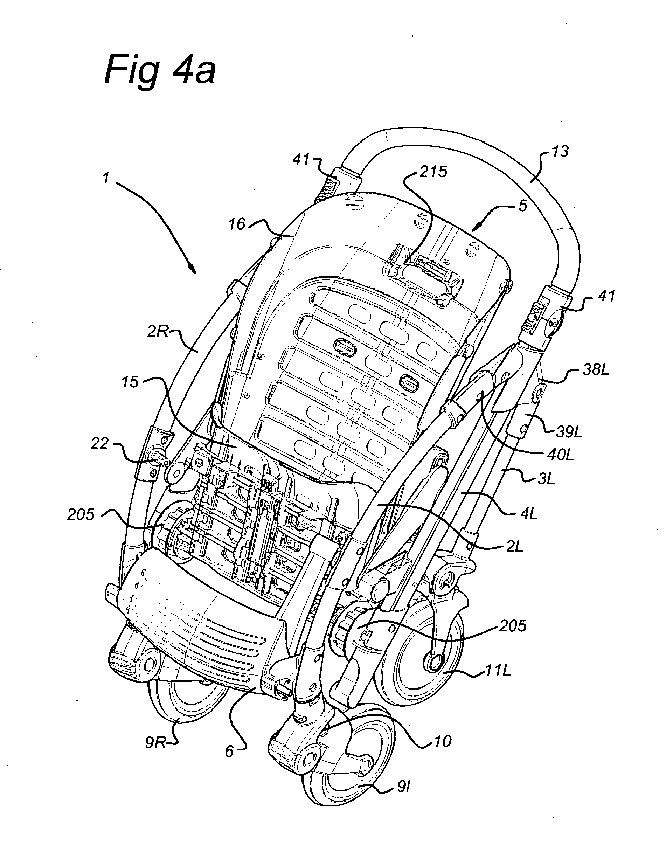

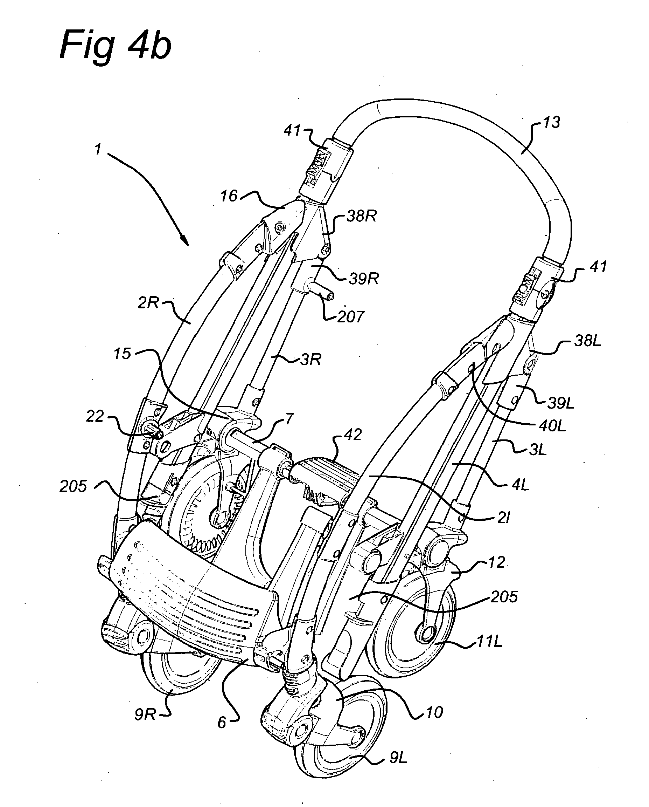

Figures 1, 2, 3 and 4 show an illustrative embodiment of a buggy according to the invention in its entirety. This embodiment relates to a folding buggy, the folded state of which is shown in Figure 4. In this embodiment, the seat, which is illustrated separately in Figure 3, is also detachable. In Figures 1 and 4a, the seat is shown fastened in the main frame and Figures 2 and 4b show the main frame of the buggy without a seat being provided therein.

In Figures 1 to 4, the buggy is denoted in its entirety by reference numeral 1. Said buggy 1 is constructed from a seat 5 and a main frame of rods and wheels wherein the seat 5 can be carried in a removable manner.

The main frame is constructed from:

- a pull/push handle 13 provided on pull/push rods 4, i.e. a left pull/push rod 4L and a right pull/push rod 4R;
- two rear wheel rods 3, i.e. a left rear wheel rod 3L and a right rear wheel rod 3R;
- two curved front wheel rods 2, i.e. a right front wheel rod 2R and a left front wheel rod 2L;
- two rear wheels 11, i.e. a right rear wheel 11 R and a left rear wheel 11 L; which rear wheels are provided at the lower ends of the rear wheel rods 3;
- two front wheels 9, both configured as spring-mounted swivelling wheels, preferably configured in accordance with NL 1.023.789/WO 2005/002882; the left front wheel is denoted by reference numeral 9L and the right front wheel by reference numeral 9R;

- a front cross bar system 6 provided between the lower ends of the front wheel rods 2; which front cross bar system provides, at least when the buggy is unfolded, a, viewed in the transverse direction T of the buggy, rigid connection between said lower ends of the front wheel rods in such a way that, viewed in said transverse direction T, the mutual distance between said lower ends of the front wheel rods 2 is invariable;

- a rear cross bar system 7 provided at the lower ends of the rear wheel rods 3 in order, viewed in the transverse direction T of the buggy, to produce a rigid connection of said lower ends of the rear wheel rods 3 in such a way that, viewed in the transverse direction T, the mutual distance between the lower ends of the rear wheel rods is fixed, at least when the buggy is unfolded;

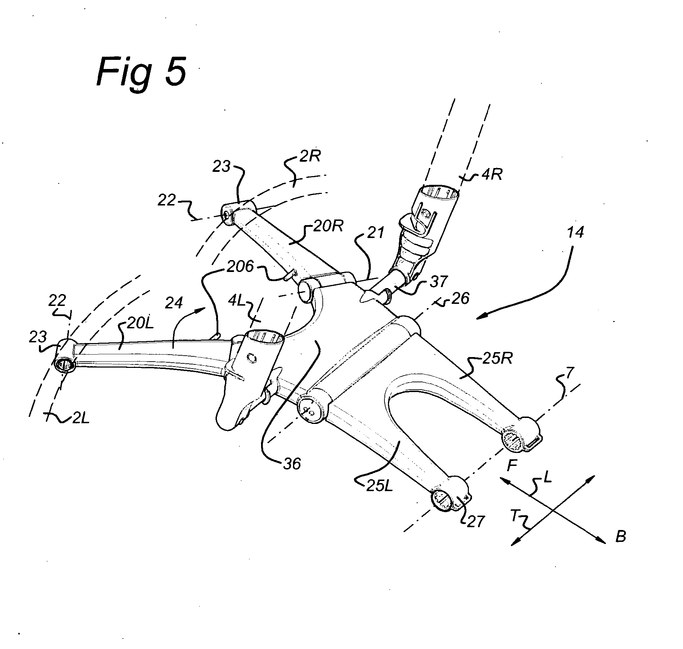

- a central frame part 14 which is shown in detail in Figure 5 and will be discussed at greater length hereinafter.

As will be clear from the foregoing, the letters L and R are added to the reference numerals in order to distinguish between a left and a right element which are otherwise identical to each other. This addition of the letters L and R having the same meaning will also be used with other elements to be discussed in greater detail. It will also occur that a reference numeral is used in the text of the description without the added letter L or R, whereas in the drawings this reference numeral is found only with the added letter L and/or R, or *vice versa.* It will, however, be clear that the respective element is the same in each case. If, for example, the text refers to the rear wheel 11, then it will be clear that the reference numeral 11R and/or 11L from the drawings is included.

With reference, in particular, to Figure 3, the seat 5 of the buggy according to the invention consists of a seat part 15, a back part 16 and two arms 17, i.e. a right arm 17R and a left arm 17L. The seat part 15 and the back part 16 are connected to each other so as to be able to hinge about a hinge axis 18. When the seat is removed from the main frame, as illustrated in Figure 3, the seat part 15 can be pivoted upward, in the direction of arrow 19, to a position approximately parallel to that of the back part. An, as it were, tightly folded state of the seat is thus obtained. As may be seen in Figure 4a, the seat can also produce this "tightly folded state" when the seat is fastened in the main frame.

With reference, in particular, to Figures 1, 2 and 4, it may be seen that the front wheel rods 2 and rear wheel rods 3 are fastened to the respective push rod 4 via a common sliding part 38. The sliding part 38 can be moved in the longitudinal direction of the push rod 4, along the push rod, between a low position corresponding to the unfolded state of the buggy - see Figure 2, wherein the sliding part is located relatively close to the lower end of the push rod 4 - and a high position corresponding to the folded state of the buggy - see Figure 4b, wherein the sliding part 18 is located further away from the lower end of the push rod 4 than when the buggy is unfolded. The rear wheel rods are fastened to the sliding part 38 via a hinging fastening 39 and the front wheel rods 2 are fastened to the sliding part 38 via hinges 40. In the case of the buggy shown in Figures 1 to 4, the front wheel rods 2 and rear wheel rods 3 become, as it were, parallel to the pull/push rod 4, when the buggy is folded (see Fig. 4), by moving the sliding part 38 upward along the pull/push rod in the direction of the push handle 13. In order to prevent accidental folding of the buggy there is provided on each pull/push rod 4 a lock which, in the unfolded state, locks the sliding parts 38 with respect to the pull/push rods 4. Said lock can consist of a respective pin which can be retracted into the respective pull/push rods. Said pins can be operated via sliding knobs 41 which are provided on each pull/push rod and are able to retract said pins, via a transmission means, counter to the action of a drawback spring. The pull/push rods 4 are configured so as to telescope (at the sliding knobs 41). As may be seen in Fig. 4, a more compact overall structure can thus be achieved in the folded state. This telescoping also allows the height of the handle 13 to be adapted as the user desires.

The buggy illustrated in Figures 1 to 4 is also provided with a central frame part 14 which is shown in detail in Figure 5. Said central frame part comprises a central cross part 8 fastened between the lower ends of the pull/push rods 4. Said central cross part 8 comprises a base 36 and a central cross bar 37 joined together in a non-rotatable manner. From the base 36 there extend in the forward direction F a left front base arm 20L and a right front base arm 20R. The front base arms 20 are each fastened, at one end, to the base 36 so as to hinge about a hinge axis 21 and, at the other end, to a respective front wheel rod 2 so as to hinge about a hinge axis 22. The hinging fastening of the front base arms 20 to the respective front wheel rods 2 is an immovable fastening, i.e. the location of the hinge axis 22 with respect to the respective front wheel rod is, viewed in the longitudinal direction of the front wheel rod, invariable. As a result of the fact that the hinge axes 21 extend neither parallel to the transverse direction T of the buggy nor transverse to the longitudinal direction L of the buggy but rather obliquely with respect to both the longitudinal direction L and the transverse direction T of the buggy, the free ends 23 of the front base arms 20, if they pivot upward in the direction indicated by arrow 24 in Figure 5, will, viewed in the transverse direction T of the buggy, move closer to each other. The result of this is that the lower ends of the front wheel rods 2, and thus the front wheels 9, move toward each other. Owing to the fact that when the buggy is folded, the sliding part 38 slides upward along the putt/push rod, the front wheel rods 2 will, when the buggy is folded, fold the front base arms 20 upward in the direction of arrow 24, as a result of which the front wheels 9 will move toward each other when the buggy is folded. When the buggy is unfolded, precisely the opposite will occur.

On the rear side B, the base part 14 carries two rear base arms 25, i.e. a right rear base arm 25R and a left rear base arm 25L. The right rear base arm 25R and the left rear base arm 25L form part of a one-piece U-shaped plastics material part. It will, however, be clear that the rear base arms 25R and 25L can also be two separate components and also that they do not have to be made from plastics material. The rear base arms 25 are fastened to the base 36 so as to hinge about a hinge axis 26. At their other end, the free end 27, the rear base arms 25 are fastened to the rear cross bar system 7. This is also a hinging fastening, the free ends 27 of the rear base arms 25 being rotatable about the rear cross bar system 7. When the buggy is folded up, the sliding part 38 is slid upward along the pull/push rod and thus pulls the rear wheel rods 3 upward. The upward pulling of the rear wheel rods 3 causes the rear cross bar system 7 to be pulled upward, so the rear base arms 25 will pivot upward in the direction of arrow 28.

That which has been described hereinbefore with reference to Figures 1 to 5 concerns a general description of an illustrative embodiment of a buggy according to the invention. The subject-matter of the invention of the present application will be considered hereinafter more specifically. It will be clear to a person skilled in the art that said subject-matter of the invention is more broadly applicable than only with the embodiment, described hereinbefore in relation to the figures.

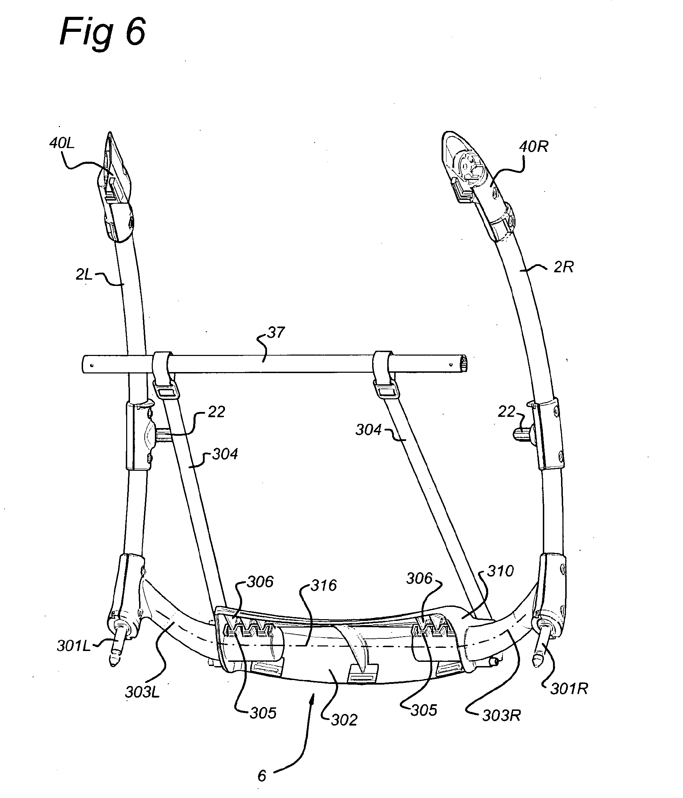

Figure 6 is a schematic and perspective view from below of a number of components of the main frame of the buggy from Figures 1 to 5 inclusive, intended to illustrate in greater detail the cross bar system according to the invention. For the sake of clarity of Figure 6, a large number of components have been omitted, although these may be found in Figures 1 to 5. Figure 6 shows the left front wheel rod 2L and the right front wheel rod 2R. At one lower end, both front wheel rods carry a swivel pin 301 on which the front wheels 9, configured as swivelling wheels, are to be inserted. Said pins 301 are also indicated in this case as the front wheel-carrying ends of the respective front wheel rods. The front wheel rods 2 each carry a hinge pin 22 to which the respective front base arm 20 of the central frame part 14 (see, in particular, Fig. 5) is fastened in a hinging manner. At the front wheel-carrying ends 301 of the front wheel rods 2 there is provided between said front wheel rods 2 the cross bar system 6. Said cross bar system 6 will now be described in greater detail with reference, in particular, to Figures 6, 7 and 8. Figure 6 also shows the central cross bar 37 of the central frame part (see, in particular, Fig. 5).

The cross bar system 6 is constructed from a right cross bar 303R, a left cross bar 303L and a middle part 302 which joins the right and left cross bars 303 together.

With reference to Figures 6, 7 and 8, the right and the left cross bar 303 are provided with recesses 305, in this case three of said recesses for each cross bar 303. Said recesses 305 open in a tangential direction with respect to the axis 316 of the respective cross bar. Provided on the intermediate part 302 are cams 306, in this case one cam for each recess in each cross bar 303. The middle part 302 is provided with two bodies 310, each having a passage 327 through which a respective cross bar 303 protrudes. Said passages 327 are formed so as to allow rotation of the intermediate part 302 about the cross bars 303. In particular, the passages 327 will have a round shape. The cams 306 extend, based on the passages 327 or, as it were, on the axis 316 (also referred to in the present application as the "cross bar axis" 316) of the cross bars, in the tangential direction. By rotating the intermediate part 302 in the direction of arrow 309 with respect to the cross bars 303, the cams 306 can thus be accommodated in the recesses 305. As soon as the cams 306 are located in the recesses 305, a cross bar system 6 which is rigid in the longitudinal direction of the axis 316 is obtained. The cross bars 303 and therefore also the front wheel-carrying ends 301 of the front wheel rods 2 have, when the cams 306 are accommodated in the recess 305, a fixed, invariable mutual distance.

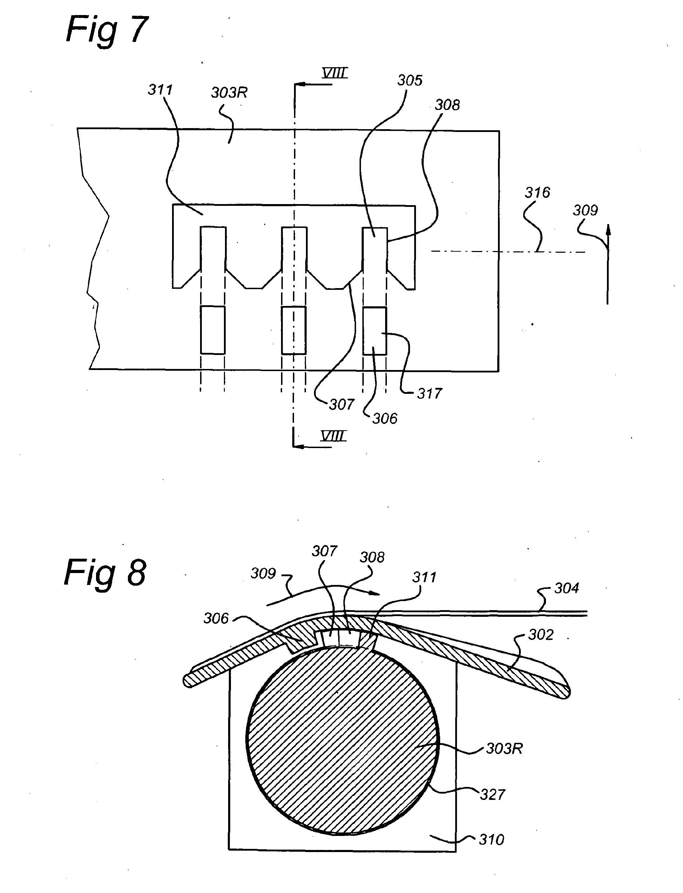

In order to simplify the accommodating of the cams 306 in the recesses 305, it is advantageous if the recesses 305, on the side facing inward counter to the direction of arrow 309, are tapered in their configuration and/or if the cams 306, on the side facing in the direction of arrow 309, are tapered in their configuration. In that which is shown in Figure 7, only the inlet ends, directed counter to arrow 309, of the recess 305 are tapered in their configuration, see the tapered faces 307. A tapered configuration of this type also allows a self-aligning effect when the alignment of the recesses 305 and the cams 306 is not optimal. The tapered guide faces 307, in particular the portions thereof provided on the right-hand side in Figure 7, also allow the cross bar system to be tensioned further, when the cams 306 are inserted into the recesses 305, by pushing the cross bars 303 apart from each other. The guide faces 307 also promote play-free accommodation of the cams 317 in the recesses 305.

Configuring the contact faces 308 located further toward the rear of the recess 305 substantially in such a way that they extend in the tangential direction means that, on complete interlocking of the cams 306 in the recesses 305, the reactive forces active between the contact faces of the cams 306 and the recess 305 do not have a component active in the tangential direction (in particular counter to the direction of arrow 309): a component of this type might cause the cam 306 to become detached from the recess 305.

The rotation of the intermediate part 302 with respect to the cross bars 303 may take place manually. Optionally, there may be provided a locking means which has first to be unlocked before the intermediate part 302 may be rotated in order to bring the cams 306 out of the recesses 305.

As discussed hereinbefore in relation, in particular, to the central frame part as illustrated in Figure 5, the front wheels of the buggy according to the invention are closer together when the buggy is folded up than when it is unfolded. This may be realised in a large number of ways. The realisation thereof in the illustrative embodiment described with reference to Figures 1 to 5 is merely an example. This can also be realised in a manner quite different from the use of a central frame part as shown in Figure 5. This effect is, for example, also achievable using an accordion-type rod system.

As will be clear from Figure 6, when the buggy is folded, the cross bars 303 will be inserted further through the passages 307 in the cheeks 310 of the intermediate part 302. The cheeks 310 will in this case be able to rest against the lower ends of the front wheel rods 2 or at least be able to come very close thereto. As will also be clear with reference to Figure 6, the cams 306 of the intermediate part 302 will be positioned, when the buggy is folded up, once the cams have become detached from the recess 305, at some point between the recess 305 and the respective front wheel rod 2. At this location, the intermediate part 302 is able to rotate substantially freely about the cross bars 303, at least to the extent that such rotation is necessary for folding the buggy.

In order to ensure when unfolding the buggy that the rigid state of the cross bar system 6 is achieved automatically, one or more cords 304 can be used very simply. Said cords 304 are fastened at one end to the intermediate part 302 and at the other end to a portion 37 of the main frame of the buggy, the distance of which to the cross bars 306 increases when the buggy is unfolded. By making the dimensions of the cords such that in the unfolded state the cords are taut at the moment at which the cams 306 engage fully with the recess 305, it can also be ensured that the intermediate part 302 cannot accidentally become detached, or at least that the interlocking between the cams and recesses cannot be lost, and that the entire main frame is pulled rigid (as pull wires do in a truss).

As is particularly clear in Figures 1 to 5, the intermediate part 302 is also advantageously configured as a footrest.

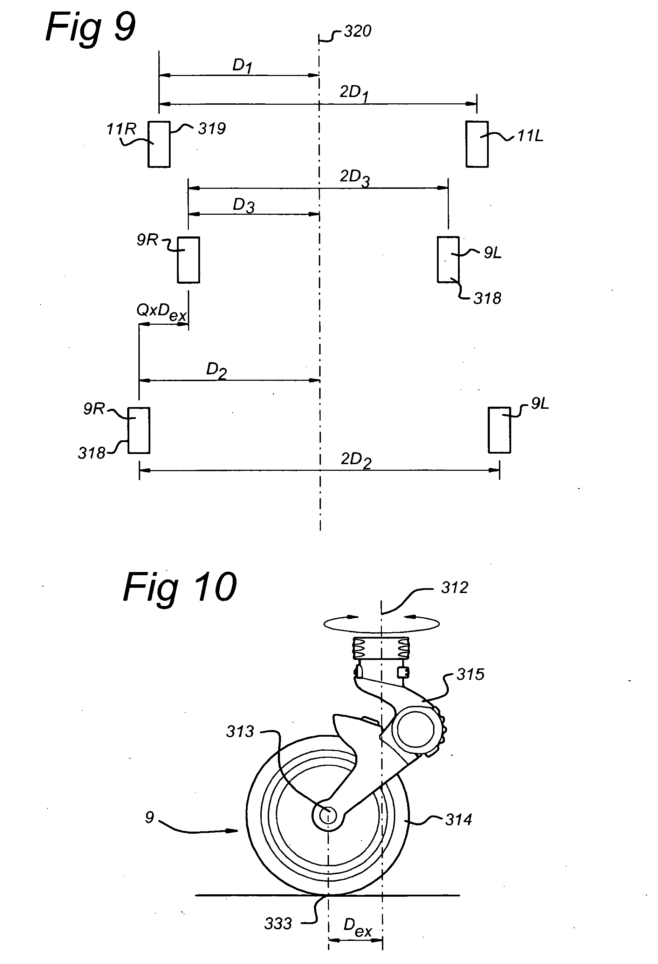

In order to clarify certain concepts, Figure 10 shows highly schematically a swivelling wheel as used for the front wheels 9 of the buggy from Figures 1 to 6. The swivelling wheel consists of one or more wheels 314 which are rotatable about a wheel rotation axis 313. The wheel 314 is carried by a fork 315. Said fork 315 is provided with a bearing which is rotatable about the swivel axis 312. The fact that said swivel axis is located at a distance $D_{ex}$ unequal to 0 (zero) from the wheel rotation axis 313 allows the swivelling wheel to rotate of its own accord, when changing direction, about the swivel axis 312 in order, as it were, to run in the direction in which the wheel is intended to travel.

The swivelling wheel enters into contact with the ground at a point 333. The distance from said point to the swivel axis 312 will remain the same at all times and be $D_{ex}$. However, if the distance is viewed from the contact point 333 to a plane defined by the swivel axis 312 and being perpendicular to the drawing plane according to Figure 10, then it will immediately be appreciated that the distance from point 333 to said plane will be dependent on the position of the swivelling wheel. In Figure 10, said distance is at its maximum, i.e. $D_{ex}$. If the swivelling wheel rotates over 180°, said distance is also at its maximum, i.e. $D_{ex}$. If the swivelling wheel in Figure 10 rotates over 90°, said distance will be 0 (zero). In the case of a stroller with swivelling wheels, this effect means that the lateral stability against toppling of a stroller of this type can decrease when the stroller is travelling not straight ahead but rather in a lateral direction, for example when making a sharp turn. This is because the swivelling wheel, which is located at the inside of the bend, will, as it were, rotate inward, so that the point of contact 333 will be closer to the longitudinal axis of the stroller. This means that a stroller, such as a buggy, with swivelling wheels has less lateral stability than initially expected. It is particularly harmful that said lateral stability during travel can decrease when turning.

Figure 9 shows, for the sake of clarity, the front and rear wheels of a buggy according to the invention for the folded-up and unfolded state of the buggy. The rear wheels 1 1 have in this case a fixed mutual distance $2D_1$, i.e. are located at a distance $D_1$ from the middle longitudinal plane 320. In the unfolded state, the front wheels 9 are located at a mutual distance of $2D_2$, i.e. at a distance of $D_2$ to the middle longitudinal plane 320. In the folded-up state, the front wheels 9 are located at a distance $2D_3$ from each other, i.e. at a distance $D_3$ from the middle longitudinal plane 320. The distance over which a front wheel is moved outward during unfolding is indicated in capital letters Q x $D_{ex}$, wherein Q is a non-dimensional number and $D_{ex}$ is the distance of the wheel rotation axis 313 with respect to the swivel axis 312 (Figure 10). As shown in Figure 9, the outwardly turned faces 318 of the front wheels 9 are closer, in the folded-up state, to the middle longitudinal plane 320 than the inwardly turned faces 319 of the rear wheels 11. This benefits the compactness of the buggy in the folded-up state.

In view of the fact that the wheels 11 have a fixed mutual distance $2D_1$, the lateral stability against toppling of the buggy will, as a matter of principle, never be able to be better than that imposed by said distance $2D_1$. Provided that the distance between the point of contact 333 of the swivelling wheels 9 and the middle longitudinal plane 320 is then also not less than $D_1$, it may therefore be assumed that the lateral stability of the buggy will not be markedly influenced by the swivelling of the swivelling wheel 9. On the basis of this assumption, it will be clear that if $D_2 \geq D_1 + D_{ex}$, then the lateral stability will be dependent on the (rear) wheels 11. After all, the point of contact 333 between the swivelling wheel and the ground will never be closer to the middle longitudinal plane 320 than the distance $D_1$. However, experience has shown that, in practical terms, the lateral stability is still substantially determined by $D_1$ if $D_2 \geq D_1 + 0.5\ D_{ex}$. Certainly, if $D_2 \geq D_1\ D_1 + 0.75\ D_{ex}$, then it may in practice reliably be assumed that the lateral stability of the buggy is determined not so much by the position of the swivelling wheels but rather by the distance $D_1$.

**Claims**

1. Folding stroller, such as a buggy (1), comprising a rod frame with:

   - a pull/push rod (4, 13);
   - a right and a left front wheel rod (2R, 2L) with a right and left front wheel-carrying end (301R, 301L), respectively, each end being provided with a front wheel (9);
   - a cross bar system (6) which is provided between the front wheel rods (2R, 2L), at the front wheels, rigidly connects, when the stroller is unfolded, viewed in the transverse direction (T) of the stroller (1), the right and left front wheel-carrying ends (301R, 301L) and is constructed in such a way that when the stroller is folded, the distance between the right and left front wheel-carrying ends (301 R, 301L) is less than it is when the stroller (1) is unfolded;

   wherein the cross bar system (6) comprises:

   - a right cross bar (303R) fastened to the right front wheel rod (2R);
   - a left cross bar (303L) fastened to the left front wheel rod (2L);
   - a cross bar axis (316) defined by the longitudinal direction of the cross bar system;
   - a middle part (302) joining the right cross bar (303R) and left cross bar (303L)
   - together;

   the right and left cross bars (303) being in line and carrying the middle part (302); the folding stroller being **characterised by** the right and left cross bars (303) each being provided with first interlocking members (305) and the middle part (302) being provided, for each cross bar, with second interlocking members (306) which are provided such that they are interlockable, by displacement of the middle part (302) with respect to the aforementioned cross bar axis (316) in a first direction (309), in order to fix the right and left cross bars (303) mutually to form a, viewed in the longitudinal direction of the cross bar axis (316), rigid cross bar system.

2. Stroller according to Claim 1, wherein the middle part (302) is arranged on to the right and left cross bar (303) so as to be able to rotate about the cross bar axis (316) and wherein the displacement of the middle part in the first direction (309) comprises rotation of the middle part about the aforementioned cross bar axis (316) in said first direction.

3. Stroller according to Claim 1 or 2, wherein said first and second interlocking members (305, 306) cooperate in such a way that they are able, during the displacement of the middle part (302) in the first direction (309), on interlocking, or at least at the start of interlocking, to push the right and left cross bars apart.

4. Stroller according to one of the preceding claims, wherein the second interlocking members each comprise a plurality of cams (306) and the first interlocking members each comprise a corresponding plurality of recesses (305); or
   wherein the first interlocking members each comprise a plurality of cams and the second interlocking members each comprise a corresponding plurality of recesses.

5. Stroller according to Claim 4, wherein the cams (306) and recesses (305) are configured in such a way that, when the stroller is unfolded, the contact faces (305, 317) between said cams (306) and recesses (305) extend in a direction transverse to the cross bar axis (316).

6. Stroller according to Claim 4 or 5, wherein said cams (306) and/or said recesses (305) have a taper (307) in the aforementioned first direction (309).

7. Stroller according to one of the preceding claims, wherein the frame also carries a right (11R) and left (11L) rear wheel, the right and left rear wheels (11) being provided at an invariable mutual distance ($2D_1$), and wherein, when the stroller is unfolded, the distance ($2D_2$) between the front wheel-carrying ends (301) of the right and left front wheel rod (2) being greater than the mutual distance ($2D_1$) of the rear wheels.

8. Stroller according to Claim 7, wherein, when the stroller is folded, the distance ($2D_3$) between the front wheel-carrying ends (301) of the right and left front wheel rod (2) is less than the mutual distance of the rear wheels ($2D_1$)..

9. Stroller according to Claim 8, wherein, viewed in the folded state of the stroller, the distance between the outsides (318) of the front wheels (9) is less than the distance between the insides (319) of the rear wheels (11).

**10.** Stroller according to one of the preceding claims, wherein the front wheels are swivelling wheels (9), the pivot axiss (312), of which define the front wheel-carrying ends (301) of the front wheel rods (2) and wherein each swivelling wheel has an eccentric distance $D_{ex}$, defined by the horizontal distance between the wheel rotation axis (313) and the pivot axis (312), which eccentric distance $D_{ex}$ is greater than 0 cm.

**11.** Stroller according to Claim 10, wherein, when the stroller is unfolded from the folded to the unfolded state, the increase in distance between the right and left front wheel-carrying ends of the front wheel rods is greater than 2 x the eccentric distance ($D_{ex}$).

**12.** Stroller according to Claim 10 or 11 in combination with one of Claims 5 to 7, wherein the front wheels (9) and rear wheels (11) are both provided symmetrically with respect to a vertical middle longitudinal plane (320) of the stroller, wherein the point of contact between each respective rear wheel and the ground is located at a first transverse distance $D_1$ from said middle longitudinal plane, wherein, when the buggy is unfolded, the pivot axis of each respective front wheel is at a second transverse distance $D_2$ from the middle longitudinal plane, wherein the following applies:

$$D_2 = D_1 + Q \; x \; D_{ex}$$

$D_1$, $D_2$, $D_{ex}$ being in cm and $Q \geq 0.5$.

**13.** Stroller according to Claim 12, wherein $Q \geq 0.75$.

**14.** Stroller according to Claim 12, wherein $Q \geq 1$.

**15.** Stroller according to one of the preceding claims, wherein the cross bar system (6) comprises at least one pull member, such as a cord (304), which is fastened, on the one hand, to the middle part (302) and, on the other hand, to a portion (18) of the frame of which, when the stroller is unfolded and viewed in a direction (B) transverse to said cross bar axis (316) of the cross bar system (6), the distance between said cross bar axis (316) and the cross bar system (6) increases, and wherein the pull member (304) is taut when the stroller is unfolded.

**16.** Stroller according to one of the preceding claims, wherein the stroller is a buggy comprising a seat.

**17.** Stroller according to one of Claims 1 to 15, wherein the stroller is a buggy provided with coupling means for the fastening of a seat to the main frame.

**18.** Stroller according to Claim 16 or 17, wherein the middle part (302) of the cross bar system (6) comprises a footrest, which footrest extends approximately horizontally when the buggy is unfolded.

**19.** Stroller according to one of the preceding claims, wherein the seat is a seat for children younger than 6 years old.

**20.** Stroller according to one of the preceding claims, wherein the right cross bar (303R) is rigidly fastened to the right front wheel rod (2R) and wherein the left cross bar (303L) is rigidly fastened to the left front wheel rod (22).

**Patentansprüche**

**1.** Faltkinderwagen, z. B. ein Buggy (1), umfassend einen Stangenrahmen mit:

  • einer Zieh-/Schiebe-Stange (4, 13);
  • einer rechten und einer linken Vorderradstange (2R, 2L) mit jeweils einem rechten und einem linken Vorderrad-tragenden Ende (301 R, 301 L), wobei jedes Ende mit einem Vorderrad (9) versehen ist;
  • einem Querbügel-System (6), das zwischen den Vorderradstangen (2R, 2L) an den Vorderrädern angeordnet ist, das, wenn der Kinderwagen aufgefaltet ist, in der Querrichtung (T) des Kinderwagens (1) betrachtet das rechte und das linke Vorderrad-tragende Ende (301 R, 301 L) starr verbindet, und das so konstruiert ist, dass dann, wenn der Kinderwagen zusammengefaltet ist, der Abstand zwischen dem rechten und dem linken Vorderrad-tragenden Ende (301 R, 301 L) kleiner als derjenige ist, wenn der Kinderwagen (1) aufgefaltet ist;

wobei das Querbügelsystem (6) umfasst:

  • einen rechten Querbügel (303R), der an der rechten Vorderradstange (2R) befestigt ist;
  • einen linken Querbügel (303L), der an der linken Vorderradstange (2L) befestigt ist;
  • eine Querbügelachse (316), die durch die Längsrichtung des Querbügelsystems bestimmt ist;
  • ein Mittelteil (302), das den rechten Querbügel (303R) und den linken Querbügel (303L) verbindet;

die rechten und linken Querbügel (303) in einer Linie sind und den Mittelteil (302) tragen;
wobei der Faltkinderwagen **dadurch gekennzeichnet ist, dass**
die rechten und linken Querbügel (303) jeweils mit ersten Verriegelungselementen (305) versehen sind und der Mittelteil (302) für jeden Querbügel mit zweiten Verriegelungselementen (306) versehen ist, die so angeordnet sind, dass sie durch Verschiebung des Mittelteils (302) in Bezug auf die vorstehend erwähnte Querbügelachse (316) in einer ersten Richtung (309) verriegelbar sind, um die rechten und linken Querbügel (303) gegenseitig zu fixieren, um ein, in einer Längsrichtung der Querbügelachse (316) gesehen, starres Querbügelsystem zu bilden.

2. Kinderwagen nach Anspruch 1, bei dem der Mittelteil (302) so auf dem rechten und linken Querbügel (303) angeordnet ist, dass er sich um die Querbügelachse (316) drehen kann, und wobei die Verschiebung des Mittelteils in der ersten Richtung (309) die Drehung des Mittelteils um die vorstehend erwähnte Querbügelachse (316) in der ersten Richtung umfasst.

3. Kinderwagen nach Anspruch 1 oder 2, bei dem das erste und zweite Verriegelungselement (305, 306) so zusammenwirken, dass sie während der Verschiebung des Mittelteils (302) in der ersten Richtung (309) während des Verriegelns, oder zumindest beim Beginn des Verriegelns, dazu geeignet sind, die rechten und linken Querbügel voneinander weg zu drücken.

4. Kinderwagen nach einem der vorangehenden Ansprüche, bei dem die zweiten Verriegelungselemente jeweils eine Vielzahl von Nocken (306) umfassen und die ersten Verriegelungselemente jeweils eine entsprechende Vielzahl von Rezessen (305) umfassen; oder
bei dem die ersten Verriegelungselemente jeweils eine Vielzahl von Nocken und die zweiten Verriegelungselemente jeweils eine entsprechende Vielzahl von Rezessen umfassen.

5. Kinderwagen nach Anspruch 4, bei dem die Nocken (306) und Rezesse (305) so gestaltet sind, dass dann, wenn der Kinderwagen aufgefaltet ist, die Kontaktflächen (305, 317) zwischen den Nocken (306) und den Rezessen (305) sich in einer Richtung quer zu der Querbügelachse (316) erstrecken.

6. Kinderwagen nach Anspruch 4 oder 5, bei dem die Nocken (306) und/oder die Rezesse (305) eine Abschrägung (307) in der vorstehend erwähnten ersten Richtung (309) haben.

7. Kinderwagen nach einem der vorangehenden Ansprüche, bei dem der Rahmen auch ein rechtes (11 R) und linkes (11 L) Hinterrad trägt, und die rechten und linken Hinterräder (11) in einem unveränderlichen gegenseitigen Abstand (2D$_1$) angeordnet sind, und bei dem der Abstand (2D$_2$) zwischen den die Vorderräder tragenden Enden (301) der rechten und linken Vorderradstange (2) größer als der gegenseitige Abstand (2D$_1$) der Hinterräder ist, wenn der Kinderwagen aufgefaltet ist.

8. Kinderwagen nach Anspruch 7, bei dem dann, wenn der Kinderwagen zusammengefaltet ist, der Abstand (2D$_3$) zwischen den die Vorderräder tragenden Enden (301) der rechten und linken Vorderradstange kleiner ist als der gegenseitige Abstand der Hinterräder (2D$_1$).

9. Kinderwagen nach Anspruch 8, bei dem, im zusammengefalteten Zustand des Kinderwagens betrachtet, der Abstand zwischen den Außenseiten (318) der Vorderräder (9) kleiner ist als der Abstand zwischen den Innenseiten (319) der Hinterräder (11).

10. Kinderwagen nach einem der vorangehenden Ansprüche, bei dem die Vorderräder schwenkbare Räder (9) sind, deren Schwenkachsen (312) die die Vorderräder tragenden Enden (301) der Vorderradstangen (2) bilden, und bei dem jedes schwenkbare Rad einen exzentrischen Abstand D$_{ex}$ hat, der durch den horizontalen Abstand zwischen der Raddrehachse (313) und der Schwenkachse (312) festgelegt wird, und wobei der exzentrische Abstand D$_{ex}$ größer als 0 cm ist.

11. Kinderwagen nach Anspruch 10, bei dem, wenn der Kinderwagen aus dem zusammengefalteten in den aufgefalteten Zustand aufgefaltet wird, die Zunahme des Abstandes zwischen dem rechten und dem linken Vorderrad-tragenden Ende der Vorderradstangen größer ist als zweimal der exzentrische Abstand (D$_{ex}$).

12. Kinderwagen nach Anspruch 10 oder 11 in Verbindung mit einem der Ansprüche 5 bis 7, bei dem die Vorderräder (9) und Hinterräder (11) beide symmetrisch im Bezug auf eine senkrechte mittlere Längsebene (320) des Kinderwagens angeordnet sind, wobei der Kontaktpunkt zwischen jedem jeweiligen Hinterrad und dem Boden in einem ersten Querabstand D$_1$ von der mittleren Längsebene angeordnet ist, und wobei dann, wenn der Buggy aufgefaltet ist, die Schwenkachse jedes jeweiligen Vorderrades in einem zweiten Querabstand D$_2$ von der mittleren Längsebene ist, und wobei das Folgende zutrifft:

$$D_2 = D_1 + Q \times D_{ex}$$

D$_1$, D$_2$, D$_{ex}$ in cm und Q≥0,5.

13. Kinderwagen nach Anspruch 12, wobei Q≥0,75.

14. Kinderwagen nach Anspruch 12, wobei Q≥1.

**15.** Kinderwagen nach einem der vorangehenden Ansprüche, bei dem das Querbügelsystem (6) mindestens ein Zugelement, wie z. B. ein Seil (304) umfasst, das einerseits an dem Mittelteil (302) und, andererseits, an einem Teil (18) des Rahmens, von dem, wenn der Kinderwagen auseinandergefaltet ist und in einer Richtung (B) quer zur Querbügelachse (316) des Querbügelsystems (6) betrachtet, der Abstand zwischen der Querbügelachse (316) und dem Querbügelsystem (6) zunimmt, befestigt ist, und wobei das Zugelement (304) gespannt ist, wenn der Kinderwagen auseinandergefaltet ist.

**16.** Kinderwagen nach einem der vorangehenden Ansprüche, bei dem der Kinderwagen ein Buggy ist, der einen Sitz umfasst.

**17.** Kinderwagen nach einem der Ansprüche 1 bis 15, bei dem der Kinderwagen ein Buggy ist, der mit Kopplungselementen für das Befestigen eines Sitzes an dem Hauptrahmen versehen ist.

**18.** Kinderwagen nach Anspruch 16 oder 17, bei dem der Mittelteil (302) des Querbügelsystems (6) eine Fußraste umfasst, und sich die Fußraste ungefähr horizontal erstreckt, wenn der Kinderwagen auseinandergefaltet ist.

**19.** Kinderwagen nach einem der vorangehenden Ansprüche, bei dem der Sitz ein Sitz für Kinder jünger als 6 Jahr alt ist.

**20.** Kinderwagen nach einem der vorangehenden Ansprüche, bei dem der rechte Querbügel (303R) starr an der rechten Vorderradstange (2R) befestigt ist, und wobei der linke Querbügel (303L) starr an der linken Vorderradstange (22) befestigt ist.

**Revendications**

**1.** Poussette repliable du type poussette compacte (1), pourvue d'un cadre tubulaire comprenant :

• une barre de traction/poussée (4, 13) ;
• des tubulures (2R, 2L) de roues avant, situées à droite et à gauche et munies, respectivement, d'extrémités (301R, 301L) de droite et de gauche qui portent des roues avant, chaque extrémité étant pourvue d'une roue avant (9) ;
• un système (6) à barres transversales qui, prévu entre lesdites tubulures (2R, 2L) de roues avant au niveau desdites roues avant, relie rigidement lesdites extrémités (301R, 301L) de droite et de gauche qui portent lesdites roues avant, lorsque la poussette est à l'état déplié, en observant dans la direction transversale (T) de ladite poussette (1), et est structurellement agencé de telle sorte que la distance, comprise entre lesdites extrémités (301R, 301L) de droite et de gauche qui portent lesdites roues avant, soit moindre à l'état replié de la poussette, qu'à l'état déplié de ladite poussette (1) ;
ledit système (6) à barres transversales comprenant :
• une barre transversale (303R) de droite, fixée à la tubulure (2R) de roue avant située à droite ;
• une barre transversale (303L) de gauche, fixée à la tubulure (2L) de roue avant située à gauche ;
• un axe (316) de barres transversales, défini par la direction longitudinale dudit système à barres transversales ;
• une partie centrale (302) reliant, l'une à l'autre, ladite barre transversale (303R) de droite et ladite barre transversale (303L) de gauche ;
• lesdites barres transversales (303), de droite et de gauche, étant alignées et portant ladite partie centrale (302) ; ladite poussette repliable étant **caractérisée par le fait que** les barres transversales (303) de droite et de gauche sont équipées, chacune, de premiers éléments (305) de verrouillage mutuel et la partie centrale (302) est dotée, pour chaque barre transversale, de seconds éléments (306) de verrouillage mutuel, qui sont prévus de manière à pouvoir être verrouillés entre eux par déplacement de ladite partie centrale (302) vis-à-vis de l'axe précité (316) des barres transversales, dans une première direction (309), en vue d'assujettir réciproquement lesdites barres transversales (303) de droite et de gauche, de manière à former un système à barres transversales rigide en observant dans la direction longitudinale dudit axe (316) desdites barres transversales.

**2.** Poussette selon la revendication 1, dans laquelle la partie centrale (302) est implantée sur les barres transversales (303) de droite et de gauche, de manière à pouvoir accomplir une rotation autour de l'axe (316) desdites barres transversales ; et dans laquelle le déplacement de ladite partie centrale, dans la première direction (309), gouverne une rotation de ladite partie centrale, dans ladite première direction, autour de l'axe précité (316) desdites barres transversales.

**3.** Poussette selon la revendication 1 ou 2, dans laquelle lesdits premiers et seconds éléments (305, 306) de verrouillage mutuel coopèrent de telle sorte qu'ils soient aptes à écarter les barres transversales de droite et de gauche, au cours du déplacement de la partie centrale (302) dans la première direction (309), lors d'un verrouillage mutuel ou, pour le moins, au stade initial d'un verrouillage mutuel.

**4.** Poussette selon l'une des revendications précédentes, dans laquelle les seconds éléments de verrouillage mutuel comprennent, chacun, une pluralité de cames (306) et les premiers éléments de verrouillage mutuel comprennent, chacun, une pluralité d'évidements (305) correspondante ; ou
dans laquelle lesdits premiers éléments de verrouillage mutuel comprennent, chacun, une pluralité de cames et lesdits seconds éléments de verrouillage mutuel comprennent, chacun, une pluralité d'évidements correspondante.

5. Poussette selon la revendication 4, dans laquelle les cames (306) et les évidements (305) sont configurés de façon telle que, lorsque ladite poussette est à l'état déplié, les faces de contact (305, 317), entre lesdites cames (306) et lesdits évidements (305), s'étendent dans une direction transversale par rapport à l'axe (316) des barres transversales.

6. Poussette selon la revendication 4 ou 5, dans laquelle lesdites cames (306), et/ou lesdits évidements (305), offrent un rétrécissement tronconique (307) dans la première direction (309) précitée.

7. Poussette selon l'une des revendications précédentes, dans laquelle le cadre porte également des roues arrière de droite (11R) et de gauche (11L), lesdites roues arrière (11) de droite et de gauche étant prévues à une distance mutuelle invariable $(2D_1)$ ; et dans laquelle, à l'état déplié de ladite poussette, la distance $(2D_2)$ séparant les extrémités (301) des tubulures (2) de roues avant de droite et de gauche, qui portent lesdites roues avant, est plus grande que ladite distance mutuelle $(2D_1)$ séparant lesdites roues arrière.

8. Poussette selon la revendication 7, dans laquelle, à l'état replié de ladite poussette, la distance $(2D_3)$ séparant les extrémités (301) des tubulures (2) de roues avant de droite et de gauche, qui portent lesdites roues avant, est plus petite que la distance mutuelle $(2D_1)$ séparant les roues arrière.

9. Poussette selon la revendication 8, dans laquelle, en observant à l'état replié de ladite poussette, la distance séparant les faces extérieures (318) des roues avant (9) est plus petite que la distance séparant les faces intérieures (319) des roues arrière (11).

10. Poussette selon l'une des revendications précédentes, dans laquelle les roues avant sont des roues oscillantes (9) dont les axes de pivotement (312) définissent les extrémités (301) des tubulures (2) de roues avant, qui portent lesdites roues avant ; et dans laquelle chaque roue oscillante présente une distance d'excentricité $D_{ex}$ définie par la distance horizontale comprise entre l'axe (313) de rotation de roue et ledit axe de pivotement (312), laquelle distance d'excentricité $D_{ex}$ est supérieure à 0 cm.

11. Poussette selon la revendication 10, dans laquelle, lorsque ladite poussette est déployée de l'état replié à l'état déplié, l'accroissement de la distance comprise entre les extrémités des tubulures de roues avant, qui portent lesdites roues avant de droite et de gauche, est supérieur à 2 x la distance d'excentricité $(D_{ex})$.

12. Poussette selon la revendication 10 ou 11 en combinaison avec l'une des revendications 5 à 7, dans laquelle tant les roues avant (9), que les roues arrière (11), sont agencées symétriquement par rapport à un plan médian longitudinal vertical (320) de ladite poussette ; dans laquelle le point de contact de chaque roue arrière respective, avec le sol, se trouve à une première distance transversale $D_1$ dudit plan médian longitudinal ; et dans laquelle, lorsque ladite poussette compacte est dépliée, l'axe de pivotement de chaque roue avant respective se trouve à une seconde distance transversale $D_2$ dudit plan médian longitudinal, sachant qu'il s'applique la relation suivante :

$$D_2 = D_1 + Q \text{ x } D_{ex},$$

$D_1$, $D_2$, $D_{ex}$ étant exprimées en cm, et Q • 0, 5.

13. Poussette selon la revendication 12, dans laquelle Q • 0, 75.

14. Poussette selon la revendication 12, dans laquelle Q • 1.

15. Poussette selon l'une des revendications précédentes, dans laquelle le système (6) à barres transversales comporte au moins un élément de traction tel qu'une sangle (304) qui est fixée, d'une part, à la partie centrale (302) et, d'autre part, à une région (18) du cadre dans laquelle, lorsque ladite poussette est dépliée et en observant dans une direction (B) transversale audit axe (316) des barres transversales dudit système (6) à barres transversales, la distance comprise entre ledit axe (316) des barres transversales et ledit système (6) à barres transversales augmente, sachant que ledit élément de traction (304) est tendu lorsque ladite poussette est dépliée.

16. Poussette selon l'une des revendications précédentes, ladite poussette étant une poussette compacte équipée d'un siège.

17. Poussette selon l'une des revendications 1 à 15, ladite poussette étant une poussette compacte munie de moyens d'accouplement dévolus à la fixation d'un siège au cadre principal.

**18.** Poussette selon la revendication 16 ou 17, dans laquelle la partie centrale (302) du système (6) à barres transversales comprend un repose-pieds, lequel repose-pieds s'étend approximativement dans le sens horizontal lorsque la poussette compacte est dépliée.

**19.** Poussette selon l'une des revendications précédentes, dans laquelle le siège est un siège destiné à des enfants âgés de moins de 6 ans.

**20.** Poussette selon l'une des revendications précédentes, dans laquelle la barre transversale (303R) de droite est fixée rigidement à la tubulure (2R) de roue avant située à droite ; et dans laquelle la barre transversale (303L) de gauche est fixée rigidement à la tubulure (2L) de roue avant située à gauche.

# Fig 1

Fig 2

# Fig 3

# Fig 4a

# Fig 4b

# Fig 5

# Fig 6

## Fig 7

## Fig 8

# Fig 9

# Fig 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1086876 A
- US 5472224 A
- US 4765645 A
- US 3989295 A
- EP 494746 A
- EP 1295776 A
- NL 1023789
- WO 2005002882 A